# EUROPÄISCHE PATENTSCHRIFT

(11) **EP 1 717 332 B1**
(45) Veröffentlichungstag und Bekanntmachung des Hinweises auf die Patenterteilung: **19.05.2010**
(21) Anmeldenummer: 06450053.1
(22) Anmeldetag: 07.04.2006
(51) Int. Cl.: C22C 38/00, C22C 38/18

(54) **Kunststoffform**
Plastic mold
Moule à matière plastique

(30) Priorität: 26.04.2005 AT 7052005
(43) Veröffentlichungstag der Anmeldung: 02.11.2006
(73) Patentinhaber: BÖHLER Edelstahl GmbH, A-8605 Kapfenberg (AT)
(72) Erfinder: Sammt, Klaus, Dipl. -Ing., 8740 Zeltweg (AT); Siller, Ingo, Dr., 8700 Leoben (AT)
(74) Vertreter: Wirnsberger, Gernot

(56) Entgegenhaltungen:
- EP-A- 1 052 304
- EP-A- 1 201 775
- EP-B- 1 290 237
- US-A- 5 641 453
- PATENT ABSTRACTS OF JAPAN Bd. 2000, Nr. 13, 5. Februar 2001 (2001-02-05) -& JP 2000 282182 A (SANYO SPECIAL STEEL CO LTD), 10. Oktober 2000 (2000-10-10)
- PATENT ABSTRACTS OF JAPAN Bd. 2000, Nr. 03, 30. März 2000 (2000-03-30) -& JP 11 335782 A (DAIDO STEEL CO LTD), 7. Dezember 1999 (1999-12-07)

## Beschreibung

Die Erfindung betrifft ein Verfahren zur Herstellung einer verwendungsbereiten Kunststoffform.

Kunststoffe werden in der modernen Technik in zunehmendem Maße in den verschiedensten Arten und Mischungen, insbesondere mit Füllstoffen oder Verstärkungsfasern oder dergleichen Material, für eine Fertigung von gegebenenfalls mechanisch beanspruchbaren Gebrauchsgegenständen verwendet.

Bei einer Herstellung von Gegenständen aus Kunststoffen wird in der Regel in eine Form bzw. in einen Formenhohlraum eine Kunststoffmasse in plastifiziertem Zustand, also zumeist bei einer erhöhten Temperatur, mit großem Druck eingepresst, wobei diese Masse an die Innenkontur auch mit kleinsten Formkavitäten vollflächig in Kontakt gebracht wird. Dieser Einpressvorgang von Kunststoffmasse, der auch als Schuss bezeichnet wird, erfolgt mit hohem Druck und beansprucht die Form in vielfacher Hinsicht. Somit sollen Kunststoffformen ein besonderes chemisch-mechanisches Eigenschaftsprofil auf höchstem Niveau aufweisen. Im Hinblick auf eine Wirtschaftlichkeit sollen auch eine günstige Vormaterial-Lagerung, kostengünstige Fertigung und lange Einsatzdauer der Formen gegeben sein.

Der Werkstoff für Kunststoffformen soll im Wesentlichen folgende Eigenschaften gleichzeitig gewährleisten:
- Gute Korrosionsbeständigkeit, weil Kunststoffe bei der Verarbeitung Säuren abspalten können;
- Hoher Verschleißwiderstand, weil beim Einpressen der plastifizierten Masse Verstärkungspartikeln und Füllstoffe höchst verschleißend auf die Konturflächen der Form wirken können;
- Große Zähigkeit, weil jeder Füllvorgang bzw. Schuss die Form schlagartig mechanisch hoch beansprucht.
- Hohe Festigkeit und niedriger Verzug im Hinblick auf gewünschte mechanische Eigenschaften, Stabilität und lange Einsatzdauer der Form.
- Gute Bearbeitbarkeit im thermisch vergüteten Zustand für rasche, kostengünstige Erstellung einer Form.
- Gute Polierbarkeit, um in der Folge höchste Oberflächengüte des Kunststoffteiles sicherzustellen.

Es besteht seit langem der Wunsch, Kunststoffformen aus einem Werkstoff zu fertigen, der alle vorab dargelegten Eigenschaften gemeinsam in hohem Maße sicherzustellen ermöglicht, bzw. im thermisch vergüteten Zustand ein Eigenschaftsprofil aufweist, welches den Forderungen weitestgehend entspricht.

Für Kunststoffformen ist in der Stahl-Eisen-Liste aufgrund der weitestgehenden praktischen Eignung dieses Werkstoffes eine Stahlsorte mit der Werkstoffnummer 1.2316 bzw. mit dem Kurznamen X36CrMo17 angegeben, wobei die Eigenschaftsangaben gemäß DIN 17 350 vorliegen. Dieser Stahl eignet sich zwar gut für viele Kunststoffformen, hat jedoch den Nachteil, dass wegen mangelnder Zähigkeit eine Formenbruchgefahr vergrößert ist. Weiters ist eine Herstellung großer Formen bzw. Formenstücke oft nicht mit einer gewünschten Homogenität der mechanischen Eigenschaften aufgrund nicht ausreichender Durchhärtbarkeit möglich. Für große Formflächen kann mit dem Stahl X36CrMo17 oft keine ausreichend gute Bearbeitbarkeit, insbesondere Polierbarkeit, wegen Inhomogenität der Mikrostruktur der Stahllegierung erreicht werden.

In der JP 2000282182 ist ein martensitischer Chromstahl beschreiben, der für Lagerteile eingesetzt wird. Dieser Chromstahl enthält (in Gew.-%) 0.20 bis 0.55% Kohlenstoff, 0.01 bis 0.50% Silizium, 0.01 bis 1.00 % Mangan, 0.01 bis 1.00% Nickel, 13.00 bis 18.00% Chrom, 0.10 bis 2.00 % Molybdän und 0.03 bis 0.18% Stickstoff.

In der EP 1 052 304 A1 ist ein martensitischer korrosionsbestândiger Chromstahl offenbart, der maximal 0.28 Gew.-% Nickel aufweist.

In der US 5 641 453 ist ein korrosionsbeständiger Stahl beschrieben, aus dem Kunststofformen erstellt werden, die danach vergütet werden. Der Stahl weist einen Summengehalt von Kohlenstoff und Stickstoff von 0.5 bis 1.2 Gew.-% auf.

Aufgabe der Erfindung ist es, ein Verfahren zur Herstellung von verwendungsbereiten Kunststoffformen mit guter Korrosionsbeständigkeit und hohem Verschleißwiderstand sowie bester Oberflächengüte in exakten Dimensionen anzugeben.

Diese Aufgabe wird durch ein Verfahren gemäß Anspruch 1 gelöst.

Die mit der Erfindung erreichten Vorteile sind im Wesentlichen darin zu sehen, dass ein Werkstoff gefunden werden konnte, welcher nach einem thermischen Vergüten ein Eigenschaftsprofil aufweist, welches eine Herstellung von wesentlich verbesserten Kunststoffformen mit verlängerter Einsatzdauer ermöglicht.

Legierungstechnisch und zum Erreichen von Synergien betreffend die Eigenschaften einer Kunststoffform ist eine genaue Einhaltung der Konzentration der jeweiligen Elemente in engen Grenzen erforderlich.

Von besonderer Wichtigkeit für eine überlegene Werkstoffhomogenität sind die Gehalte an Kohlenstoff und Stickstoff.

Bei Kohlenstoffgehalten von 0,30 Gew.-% und höher können größere Karbide gebildet werden, in deren Umgebung eine Verarmung der örtlichen Konzentrationen von Chrom und Molybdän entsteht, wodurch die Polierbarkeit und die Bearbeitbarkeit sowie die Korrosionsfestigkeit des Materials verschlechtert sind. Niedrige Gehalte an Kohlenstoff und zwar 0,25 Gew.-% und weniger bewirken einen ungewünschten Härteabfall des vergüteten Werkstoffes und derart einen hohen Formenverschleiß.

Stickstoff wirkt in der Legierung neben korrosionsverbessernd, härtend, weil dieses Element eine Gitterverspannung fördert. Eine Nitridbildung durch hohe Stickstoffaffinitäten ist jedoch allenfalls zu vermeiden, woraus ein höchster Stickstoffgehalt von weniger als 0,18 Gew.-% resultiert. Eine deutlich günstige Wirkung von Stickstoff auf die Festigkeit und Zähigkeit des Werkstoffes ist bei Gehalten von mehr als 0,05 Gew.-% gegeben.

Wie oben erwähnt, sind die Konzentrationen an Kohlenstoff und Stickstoff in gemeinsamer Wirkungskinetik wichtig für höchste Homogenität von Gefüge und beste mechanische Eigenschaften sowie eine gute Bearbeitbarkeit und Polierbarkeit des Materials. Es wurde gefunden, dass das Verhältnis Kohlenstoff zu Stickstoff erfindungsgemäß nicht kleiner als 1,4, jedoch auch nicht größer als 5,8 sein soll, um die synergetische Wirkung beider Elemente in der Legierung zu optimieren. Es wird angenommen, dass die Wechselwirkung der Elemente Kohlenstoff und Stickstoff in diesem Verhältnisbereich der Konzentrationen und somit die Aktivität zu Chrom und Molybdän besonders günstig ein Erreichen eines überlegenen Eigenschaftsprofils des Werkstoffes, ausgerichtet auf Kunststoffformen, begründet.

Ein wesentliches Legierungselement des Stahles ist Nickel, weil durch Nickel, wie gefunden wurde, die Durchhärtbarkeit wesentlich verbessert ist und die mechanischen Eigenschaften des thermisch vergüteten Werkstoffes auch bei großen Vormaterialdimensionen über den Querschnitt im Wesentlichen gleich bleiben. Nickel in Gehalten von mehr als 0,5 Gew.-% steigert auch die Homogenität der Mikrostruktur und hilft mit einer Begrenzung des Stickstoffgehaltes auf weniger als 0,18 Gew.-% bei einer weitestgehenden Vermeidung einer Bildung von Delta-Ferrit im Gefüge. Nickelgehalte von 1,10 Gew.-% und höher wirken jedoch unerwünscht hinsichtlich einer Stabilisierung von Austenit.

Durch Chrom in Konzentrationen von über 14,0 Gew.-%, jedoch von weniger als 15,0 Gew.-% und Molybdän in solchen von mehr als 0,8 Gew.-% und weniger als 1,1 Gew.-% ist einerseits der Werkstoff hoch korrosionsbeständig und weist anderseits in Verbindung mit Kohlenstoff, Stickstoff und Nickel überlegene Härtbarkeit bei einer Herstellung von großem Kunststoffformen-Vormaterial auf.

Schwefel, der in der Regel die Bearbeitbarkeit von Stählen verbessert, ist im erfindungsgemäßen Kunststoffformen-Vormaterial nur mit einem Gehalt von weniger als 0,005 Gew.-% zugelassen, weil bei höheren Schwefelwerten sich die mechanischen Eigenschaften, insbesondere die Zähigkeit und die Dauerstandsfestigkeit quer zur Verformungsrichtung unerwünscht niedrig gestalten. Die niedrigen Schwefelwerte erlauben auch die Konzentration an Mangan, welches für eine Abbindung des Schwefels erforderlich ist, in günstiger Weise mit mehr als 0,25 Gew.-% niedrig vorzusehen. Die obere Grenze für Mangan, welches zwar verfestigend auf den Mischkristall wirkt, ist mit weniger als 0,65 Gew.-% festgesetzt, weil höhere Werte das Umwandlungsverhalten ungünstig beeinflussen.

Silizium ist zur Desoxidation der Schmelze ein wichtiges Element und ist aus Stahlreinheitsgründen mit Gehalten von mehr als 0,15 Gew.-% vorgesehen. Weil jedoch Silizium im Stahl versprödend wirken kann, ist die Siliziumkonzentration im Kunststoffformenwerkstoff mit weniger als 0,35 Gew.-% limitiert.

Einer der mit dem erfindungsgemäßen Verfahren erreichten Vorteile ist darin zu sehen, dass eine Bearbeitung des Kunststoffformen-Vormaterials im thermisch vergüteten also gehärteten und vorzugsweise zweimal angelassenen Zustand erfolgt, somit auch große Formen maßgenau gefertigt werden und keinerlei Verzug durch eine Wärmebehandlung und somit Nacharbeit entstehen kann.

Im Folgenden werden anhand von Vergleichsdaten vom Werkstoff nach DIN Werkstoffnummer 1.2316 Ergebnisse der Korrosionsprüfung und einige mechanische Eigenschaftswerte des erfindungsgemäß für Formen eingesetzten Stahles dargelegt.

Es zeigen:
- Fig. 1: das Ergebnis eines Salzsprühtests
- Fig. 2: die Kerbschlagzähigkeit KV mit der Verwendung von ISO-Spritzkerbproben EN 10045 (Charpy-V-Notch);
- Fig. 3: die Schlagarbeit von 4.8-fach verformten Proben nach SEP 1314

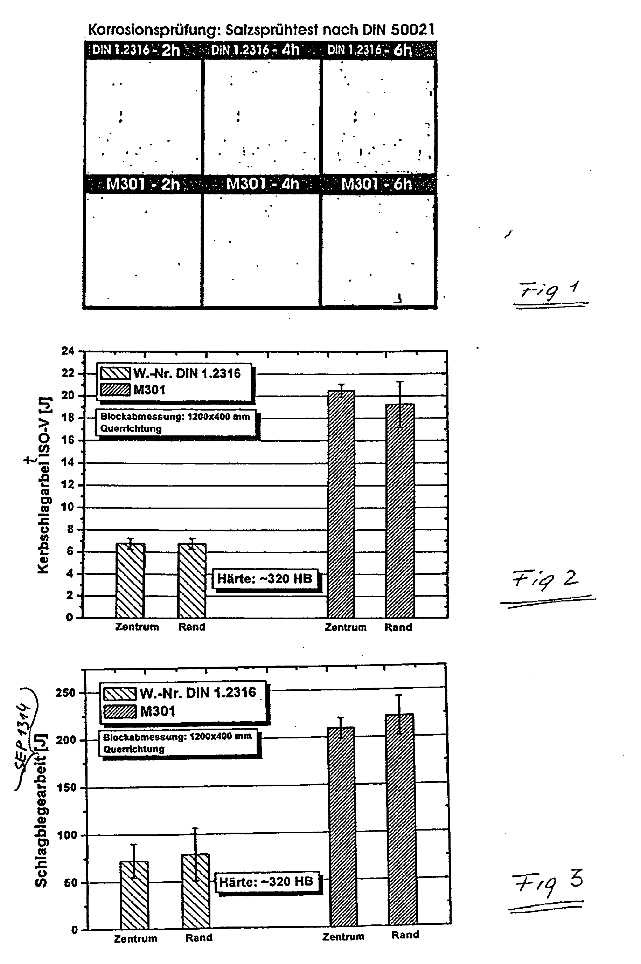

Aus Fig. 1 ist im Vergleich mit dem Werkstoff gemäß DIN Werkstoffnummer 1.2316 eine erfindungsgemäße erhöhte Korrosionsbeständigkeit von Proben M301 der Versuchslegierung im Salzsprühtest nach DIN 50021 zu ersehen, wobei diese Verbesserung durch eine homogene und verfeinerte Gefügestruktur erreicht wird.

In Fig. 2 sind die erhaltenen Messwerte der Kerbschlagzähigkeitsprüfung (Charpy-V-Notch) des Werkstoffes in Querrichtung aus Formenblöcken ersichtlich. Nach einer thermischen Vergütung auf eine Härte von ca. 320 HB wurden am erfindungsgemäß zu verwendenden Material etwa 3 mal höhere Werte für die Kerbschlagarbeit festgestellt.

Die für Kunststoffformen besonders aussagekräftige Erprobung im Schlagbiegeversuch, Fig. 3 nach SEP 1314 an ungekerbten Proben, erbrachte ebenfalls um ca. das Dreifache verbesserte Messwerte.

## Patentansprüche

1. Verfahren zur Herstellung einer verwendungsbereiten Kunststoffform mit guter Korrosionsbeständigkeit und hohem Verschleißwiderstand sowie bester Oberflächengüte in exakten Dimensionen, wobei
in einem ersten Schritt eine Schmelze, enthaltend die Elemente in Gew.-%
| | | | |
|---|---|---|---|
| Kohlenstoff | mehr als 0,25 %, | jedoch weniger als | 0,30 % |
| Silizium | mehr als 0,15 %, | jedoch weniger als | 0,35 % |
| Mangan | mehr als 0,25 %, | jedoch weniger als | 0,65 % |
| Phosphor | | weniger als | 0,030 % |
| Schwefel | | weniger als | 0,005 % |
| Chrom | mehr als 14,00 %, | jedoch weniger als | 15,00 % |
| Molybdän | mehr als 0,80 %, | jedoch weniger als | 1,10 % |
| Nickel | mehr als 0,50 %, | jedoch weniger als | 1,10 % |
| Stickstoff | mehr als 0,05 %, | jedoch weniger als | 0,18 % |
Eisen und herstellungsbedingte Verunreinigungen als Rest
in eine Gießform eingebracht und zu einem Gussstück erstarren gelassen wird, worauf
in einem zweiten Schritt eine Warmumformung des Gussstückes mit einem Verformungsgrad von größer 4-fach und dabei eine Schaffung eines Formen-Rohmaterials erfolgt und
in einem dritten Schritt das Formen-Rohmaterial durch zumindest einmaliges Härten mit einer Austenitisierungstemperatur von 1000 °C bis 1040 °C und
zumindest einmaliges Anlassen bei einer Temperatur zwischen 600 °C und 620 °C auf eine durchgehende Materialhärte von größer 280 HB vergütet und derart ein Formen-Vormaterial gebildet wird, worauf
in einem Folgeschritt am Vormaterial gegebenenfalls nach Entnahme eines Vormaterialteiles an diesem eine spanabhebende Bearbeitung mit Schaffung einer Negativ-Kontur erfolgt und derart eine verzugsfreie, verwendungsbereite Kunststoffform erstellt wird.

## Claims

1. Method for producing a ready-to-use plastic mould having good corrosion resistance and high resistance to wear as well as an optimum surface quality with accurate dimensions,
in a first step, a melt containing the elements in % by weight:
| | | | | |
|---|---|---|---|---|
| carbon | greater than | 0.25% | but less than | 0.30% |
| silicon | greater than | 0.15% | but less than | 0.35% |
| manganese | greater than | 0.25% | but less than | 0.65% |
| phosphorous | | | less than | 0.030% |
| sulphur | | | less than | 0.005% |
| chromium | greater than | 14.00% | but less than | 15.00% |
| molybdenum | greater than | 0.80% | but less than | 1.10% |
| nickel | greater than | 0.50% | but less than | 1.10% |
| nitrogen | greater than | 0.05% | but less than | 0.18% |
balance iron and production impurities,
is introduced into a casting mould and is left to solidify to form a casting, whereupon
in a second step, hot forming of the casting takes place to a degree of deformation which is greater than four times and thus a raw material mould is produced, and
in a third step the raw material mould is heat-treated by hardening at least once at an austenitising temperature of 1000°C to 1040°C and tempering at least once at a temperature of between 600°C and 620°C to a consistent material hardness of greater than 280 HB and thus a preliminary material mould is formed, whereupon in a subsequent step on the preliminary material, optionally after removing a preliminary material part, machining is carried out thereon, creating a negative contour and thus a non-warping, ready-to-use plastic mould is produced.

## Revendications

1. Procédé de fabrication d'un moule en matière plastique prêt à l'emploi, faisant preuve d'une bonne résistance à la corrosion et d'une haute résistance à l'usure et avec une qualité de surface haut de gamme dans des dimensions précises,
dans une première étape, une masse fondue, contenant en % en poids les éléments
| | | | | |
|---|---|---|---|---|
| Carbone | plus de | 0.25% | mais moins de | 0.30% |
| Silicium | plus de | 0.15% | mais moins de | 0.35% |
| Manganèse | plus de | 0.25% | mais moins de | 0.65% |
| Phosphore | | | moins de | 0.030% |
| Soufre | | | moins de | 0.005% |
| Chrome | plus de | 14.00% | mais moins de | 15.00% |
| Molybdène | plus de | 0.80% | mais moins de | 1.10% |
| Nickel | plus de | 0.50% | mais moins de | 1.10% |
| Azote | plus de | 0.05% | mais moins de | 0.18% |
du fer et des impuretés dues à la fabrication en tant que reste
étant introduite dans un moule et laissée solidifier en une pièce coulée
dans une deuxième étape, un formage à chaud de la pièce coulée étant effectué à un taux de déformation supérieur au quadruple, donnant lieu à la création d'une matière brute pour un moule et
dans une troisième étape, par au moins une trempe unique à une température d'austénitisation de 1000 °C à 1040 °C et par au moins un revenu unique à une température comprise entre 600 °C et 620 °C, la matière brute pour un moule étant améliorée par trempe et revenu à une dureté de matière constante supérieure à 280 HB, donnant lieu à un produit primaire pour un moule,
suite à quoi, dans une étape suivante, le cas échéant, après prélèvement d'une partie du produit primaire, un traitement par enlèvement de copeaux étant effectué sur celui-ci, avec création d'un contour négatif et un moule en matière plastique indéformable, prêt à l'emploi étant ainsi créé.
